# EUROPEAN PATENT SPECIFICATION

(11) **EP 3 979 452 B1**
(45) Date of publication and mention of the grant of the patent: **19.02.2025**
(21) Application number: 21800376.2
(22) Date of filing: 27.04.2021
(51) Int. Cl.: H02J 3/14, H02J 7/00, B60L 53/63, B60L 53/67

(54) **SMART CHARGING ENERGY SOURCE ROUTING SYSTEM AND IMPLEMENTATION METHOD THEREOF**
SYSTEM ZUM ROUTEN EINER INTELLIGENTEN LADEENERGIEQUELLE UND IMPLEMENTIERUNGSVERFAHREN DAFÜR
SYSTÈME DE ROUTAGE DE SOURCE D'ÉNERGIE DE CHARGE INTELLIGENTE ET SON PROCÉDÉ DE MISE EN OEUVRE

(30) Priority: 08.05.2020 CN 202010382330
(43) Date of publication of application: 06.04.2022
(73) Proprietor: Shenzhen Dingwang Technology Co., Ltd., Shenzhen, Guangdong 518000 (CN)
(72) Inventor: ZENG, Zhili, Shenzhen, Guangdong 518000 (CN); LIU, Hongyun, Shenzhen, Guangdong 518000 (CN); LANG, Jie, Shenzhen, Guangdong 518000 (CN); ZHANG, Sicheng, Shenzhen, Guangdong 518000 (CN)
(74) Representative: Zaboliene, Reda
(86) International application number: PCT/CN2021/090119
(87) International publication number: WO 2021/223624

(56) References cited:
- EP-A1- 2 551 987
- WO-A2-2013/144947
- CN-A- 102 185 343
- CN-A- 104 810 894
- CN-A- 106 096 533
- CN-A- 106 684 968
- CN-A- 107 994 654
- CN-A- 109 378 879
- CN-A- 111 313 422
- DE-A1- 102013 205 496
- KR-A- 20130 011 811
- US-A1- 2015 165 917
- US-A1- 2020 055 416
- WANG LIJUN: "Analysis of Optimization Strategy and Effects of Electric Vehicle Charging Load on Distribution System", ZHONGGUO GAO-XIN JISHU QIYE = CHINA HIGH TECHNOLOGY ENTERPRISES, ZHONGGUO GAO-XIN JISHU QIYE FAZHAN PINGJIA ZHONGXIN, CN, no. 4, 28 February 2017 (2017-02-28), CN , pages 23 - 25, XP055863291, ISSN: 1009-2374, DOI: 10.13535/j.cnki.11-4406/n.2017.04.012

## Description

### TECHNICAL FIELD

The present disclosure relates to the technical field of charging piles, and in particular, to intelligent charging energy routing.

### BACKGROUND ART

As the new energy plan has been gradually implemented and requirements on implementation and application of new energy are increasing, China has included new energy charging piles in the fourth major field in seven major fields of new infrastructures. Therefore, how to continuously meet increasing requirements on charging piles for new energy vehicles becomes an urgent problem to be resolved currently by charging stations. At present, existing charging station technologies still have the following major problems.
1. A transformer capacity of an existing power grid cannot be used to meet requirements of an old community on the charging piles.
   There is no reserve space in the old community for installation and use of the charging piles in terms of power distribution. In addition, due to limitations of a site and a power of the power grid, during a peak period of residential electricity consumption, the charging station basically cannot meet a requirement of charging station construction or capacity expansion construction for the community by the Ministry of Housing and Urban-Rural Development. Power distribution network transformation required for construction of the charging station of the old community is costly (according to a survey, power distribution network transformation that meets the requirement in first-tier cities costs more than 10 billion). When power consumption is low at night, there is a serious waste of 70% power resources.
2. In existing charging stations, there is a present situation in which vehicles that need to be charged cannot get charging services. How to ensure that an installation rate of charging piles is increased on a premise that the transformer does not exceed the capacity is an urgent problem to be resolved currently.
3. Efficiency of power outputting of a transformer in a large charging station is low. When power requirements of charging vehicles are less than a total power of charging piles or rated powers of the charging piles, some powers of the charging pile are idle, resulting in low power efficiency of the charging pile. For example, actual efficiency of power outputting of a large transformer of a general fast charging station is only 68%. Even in a fast charging station using a charging stack, efficiency is only 73%, and power loss is relatively large. How to improve a utilization rate of the transformer and improve a utilization rate of a charging power of the charging pile are urgent problems to be resolved currently.
4. Designs of a power distribution cabinet and a power distribution network are relatively conservative, and are not suitable for specific scenarios of charging field stations. Currently, it is rare that charging piles connected to the power distribution cabinet and the power distribution network are charged at full load at the same time, and most of the charging piles are used at a low utilization rate. Input powers of a common power distribution cabinet and power distribution network are usually designed based on a sum of output powers with hardly considering a fact of relatively low charging load of charging piles of the charging field station. Usually, both power distribution designs of the power distribution cabinet and the power distribution network greatly exceed required powers, resulting in idleness and a waste of many powers of power distribution.

It can be learned from the foregoing analysis that there is an urgent need in the art for a better technical solution in which required powers are combined to improve a utilization rate of a power of power distribution.

DE 102013205496 discloses a vehicle charging control device includes charging devices (CSa, CSb, CSc) and a controller (32). The controller adjusts a total upper limit that defines an upper limit of the total energy output from the chargers to vehicles. The controller adjusts an individual upper limit that defines an upper limit of energy output from a respective charger to a corresponding vehicle. The controller performs a limiting process before performing an output process that allows at least two chargers to output the power to the corresponding vehicles. The limiting process limits the energy output from at least one of the at least two chargers to a limited upper limit smaller than the corresponding individual upper limit to prevent the total energy from exceeding the total upper limit even if the energy output from the other of the at least two chargers exceeds the corresponding individual upper limit.

US 20150165917 discloses a method, a charge controller, a charger and charging system for charging a battery of an electric vehicle, which can include a) determining a priority for each port where an electric vehicle is connected, b) assigning a maximum available power budget to a port with first priority, c) performing a charge session at the port with the first priority, d) monitoring actual power delivered to the vehicle from the priority port, e) adjusting the power budget value of the priority port depending on the actual power delivered to the vehicle and f) assigning a remaining portion of the power budget to the port with the second highest priority, g) if the power budget exceeds a predetermined threshold value, starting or restarting a charge session at the port where the remaining portion of the power budget is assigned, and h) repeating steps e-h.

EP 2551987 discloses a charging control apparatus (1) which supplies charging power to each vehicle in a charging station even when a large number of users select fast charging which requires high charging current. The charging control apparatus (1) comprises a power supplying unit (4) that is connected to a power source unit (3), and a plurality of vehicle charging stands (20) that are connected to the power supplying unit (4), and supplies charging power to vehicles connected to the vehicle charging stands (20). The power supplying unit (4) acquires the charge information of each vehicle charging stand (20), calculates a power supply amount to be supplied to each vehicle charging stand (20) on the basis of the charge information, and controls a supplemental battery unit (41) on the basis of the power supply amount. A control unit (44) of the power supply unit (4) supplies each vehicle charging stand (20) with supplemental power from the supplemental battery unit (41) and power from the power source (3) when the power supply amount is greater than or equal to a first threshold amount.

US 2020055416 discloses a multipurpose charging system suitable for supplying charging power to an electricity-powered vehicle. The charging system comprises a plurality of spaced apart fixtures, where each fixture comprises a power inlet for receiving electrical energy. At least one of the fixtures is an EVSE fixture comprising a control device system comprising an EVSE control device and an EV plug, where the EVSE control device is configured to charge, via the EV plug, a rechargeable battery powering the electricity-powered vehicle. The energy transfer from the EV plug to the battery may take place via a charging cable. The charging system further comprises a primary power source arranged outside the fixtures for supplying electric energy (PS) to the power inlet of each of the fixtures, one or more second electric loads arranged at least partly within at least one of the fixtures and a solid state transformer system arranged within the at least one EVSE fixture. The solid state transformer system comprises at least an EVSE solid state transformer having a primary side being electrically connectable to the primary power source for receiving electric energy at a voltage level VPS and a secondary side providing electric energy at a voltage level VEVSE, the secondary side being electrically connectable to the EVSE control device, either directly or indirectly.

### SUMMARY

An objective of the present invention is to provide an intelligent charging energy routing system and a control method thereof, to resolve a prior-art defect that input powers of charging piles cannot be fully used, which causes idleness and a waste of many powers of power distribution.

To achieve the foregoing objective, the present disclosure provides an intelligent charging energy routing system, including an intelligent charging energy router and charging piles, where the intelligent charging energy router includes an electrical system and a management scheduling system.

The electrical system is configured to output a power input by the intelligent charging energy router to the charging piles for use, and includes an input unit and an output unit electrically connected in sequence, a maximum output power limited by the intelligent charging energy routing system is less than a sum of rated powers of the charging piles, and the output unit is electrically connected to each charging pile.

The electrical system further includes an electrical protection unit, a maximum input power limited by the electrical protection unit is less than a sum of maximum output powers output by the electrical protection unit to all paths, and the maximum output power limited by the intelligent charging energy routing system is less than the maximum input power limited by the electrical protection unit.

The management scheduling system includes a control subsystem in communication connection to the charging piles, the control subsystem includes a central processing unit (CPU) and a storage unit, the CPU is configured to: set and read the stored maximum output power limited by the intelligent charging energy routing system, receive an actual power and a required power that are reported by the charging pile, calculate whether a sum of actual powers of the charging piles is greater than the read maximum output power limited by the intelligent charging energy routing system, calculate control powers of the connected charging piles in combination with required powers, and send power control instructions to the charging piles based on a calculation result, and the storage unit is configured to store the maximum output power limited by the intelligent charging energy routing system.

The charging piles each are separately electrically connected to the output unit and in communication connection to the control subsystem in the management scheduling system, upload the actual power and the required power to the management scheduling system, and receive and execute the power control instruction delivered by management scheduling system.

The electrical system further comprises a measurement unit, the measurement unit is in communication connection to the management scheduling system, and is used by the control subsystem to perform power verification, and the management scheduling system sends the power control instructions to the charging piles based on a calculation result between a measured power of the input unit and the maximum output power limited by the intelligent charging energy routing system.

In an embodiment, the electrical system may further include an electrical protection unit disposed between the input unit and the output unit, a maximum input power limited by the electrical protection unit may be less than a sum of maximum output powers output by the electrical protection unit to all paths, and the electrical protection unit may break a loop between the input unit and the output unit when a sum of actual output powers of the charging piles is greater than the maximum input power limited by the electrical protection unit.

In an embodiment, the electrical system may further include an electrical protection unit disposed between the output unit and the charging piles, a maximum input power limited by the electrical protection unit may be less than a sum of maximum output powers output by the electrical protection unit to all paths, and the electrical protection unit may break a loop between the output unit and the charging piles when a sum of actual output powers of the charging piles is greater than the maximum input power limited by the electrical protection unit.

In an embodiment, the electrical system may further include an electrical protection unit disposed before the input unit, a maximum input power limited by the electrical protection unit may be less than a sum of maximum output powers output by the electrical protection unit to all paths, and the electrical protection unit may break a loop between the electrical protection unit and the input unit when a sum of actual output powers of the charging piles is greater than the maximum input power limited by the electrical protection unit.

In an embodiment, the CPU may include a setting module, a receiving module, a calculation module, and a control module.

The setting module may be configured to set and read the maximum output power limited by the intelligent charging energy routing system, and the specified maximum output power limited by the intelligent charging energy routing system may be stored in the storage unit.

The receiving module may be configured to receive messages reported by the charging piles, and information reported by the charging piles may include but are not limited to the actual powers and the required powers of the charging piles, and be used to receive data transmitted by the measurement unit.

The calculation module may be configured to: calculate the sum of the reported actual powers of the charging piles, compare the sum of the actual powers with the read maximum output power limited by the intelligent charging energy routing system, and calculate the control powers of the connected charging piles in combination with the required powers based on a comparison result.

The control module may be configured to deliver the control instructions to the charging piles based on the calculation result, to ensure that the actual powers of the charging piles are executed based on the control powers and do not exceed the specified maximum output power limited by the intelligent charging energy routing system.

In an embodiment, the electrical protection unit may be a thermal-magnetic trip circuit breaker.

In an embodiment, the electrical protection unit may be a fuse having an alternating current fuse.

In an embodiment, the measurement unit may be an alternating current meter having a communication function.

In an embodiment, the measurement unit may be a programmable logic device, and the programmable logic device may measure a voltage value through analog/digit (AD) and convert the voltage value into a power value.

In an embodiment, the measurement unit may communicate with the management scheduling system by using, but not limited to, an RS485 serial port, wireless fidelity (WiFi), Bluetooth, Zigbee, Ethernet ETH, or a control area network (CAN).

In addition, the present disclosure further provides a control method based on the foregoing intelligent charging energy routing system. The control method applies the foregoing intelligent charging energy router, and includes:
receiving messages reported by the charging piles, where the messages include but are not limited to the required powers and the actual powers of the connected charging piles;
presetting a condition for calculation of the control powers of the connected charging piles based on the actual powers of the connected charging piles and the maximum output power limited by the intelligent charging energy routing system; where the preset condition is determining and comparing the sum of the actual powers of the charging piles with the maximum output power configured and limited by the intelligent charging energy routing system;
calculating the control power of the connected charging pile under the preset condition for calculation of control powers of the connected charging piles and based on the maximum output power limited by the intelligent charging energy routing system, the actual power, and the required power; and
sending the power control instructions to the connected charging piles, where the control instruction includes the control power of the connected charging pile, and the control power is a maximum output power allowed by the connected charging pile.

A further solution of the control method of the intelligent charging energy routing system in the present disclosure is:
calculating the control power of the connected charging pile based on the maximum output power limited by the intelligent charging energy routing system, the actual power, and the required power if the sum of the actual powers reported by the connected charging piles is greater than the maximum output power limited by the intelligent charging energy routing system, so that the sum of the actual powers of the charging piles does not exceed the maximum output power limited by the intelligent charging energy routing system when the control powers of the charging piles are calculated and output; and
calculating the control power of the connected charging pile based on the maximum output power limited by the intelligent charging energy routing system, the actual power, and the required power if there is a distributable surplus power between the sum of the actual powers reported by the connected charging piles and the maximum output power limited by the intelligent charging energy routing system, so that the distributable surplus power of the intelligent charging energy routing system is 0 or the calculated and output control power of the charging pile meets the required power.

In view of the problem that is mentioned in the technical background of the present disclosure and that is in the industry, in the present disclosure, an input power of the intelligent charging energy routing system is managed and scheduled on a premise of safety and reliability based on connections between the intelligent charging energy router and the charging piles, so that the input power is fully and properly distributed among all the charging piles, and the input power of the intelligent charging energy routing system is efficiently used.

Beneficial effects brought to alternating current charging stations by using the intelligent charging energy routing system in the present disclosure include but are not limited to:
(1) resolving problems of installation and capacity expansion of charging piles and charging guarantee under a condition of an insufficient transformer capacity;
(2) resolving a problem of installation and capacity expansion of charging piles under a safe condition; and
(3) implementing power adjustment and control of charging piles.

Beneficial effects achieved, for direct current charging stations, by using the intelligent charging energy routing system in the present disclosure include but are not limited to:
(1) alleviating problems of a low utilization rate and idleness of a transformer power in fast charging stations mainly using non-vehicle-mounted direct current chargers; and
(2) alleviating problems of a low utilization rate and idleness of a transformer power in fast charging stations mainly using split-type non-vehicle-mounted direct current chargers.

For technical problems of charging stations in the industry, benefits of the present disclosure are as follows:
(1) fully using existing power resources to implement charging station construction or capacity expansion construction, effectively reducing operating costs of charging stations, implementing multi-win among power grid companies, users, and charging station operators, and reducing huge costs of power distribution network transformation;
(2) ensuring to improve an installation rate of charging piles on a premise that a transformer does not exceed a capacity, and implementing infinite capacity expansion of charging piles; and meeting charging requirements of vehicles of users based on priorities; and
(3) improving a utilization rate of a transformer in a charging station, improving a utilization rate of a charging power of a charging pile, greatly reducing economic loss caused by power loss, and achieving multi-win among customers, charging stations, and operators.

### BRIEFT DESCRIPTION OF THE DRAWINGS

The present disclosure is further described below with reference to the accompanying drawings.
FIG. 1 is a schematic block diagram of an intelligent charging energy routing system according to the present disclosure;
FIG. 2 is a schematic diagram of an implementation apparatus of an intelligent charging energy routing system according to the present disclosure;
FIG. 3 is a schematic structural diagram of an input unit according to an embodiment of the present disclosure;
FIG. 4 is a schematic structural diagram of an input unit according to another embodiment of the present disclosure;
FIG. 5 is a schematic structural block diagram of a management scheduling system according to the present disclosure;
FIG. 6 is a schematic flowchart of an implementation method of an intelligent charging energy routing system according to the present disclosure;
FIG. 7 is a flowchart of specific steps of an implementation method of an intelligent charging energy routing system according to the present disclosure;
FIG. 8 is a specific flowchart of an implementation method of an intelligent charging energy routing system according to an embodiment of the present disclosure; and
FIG. 9 is a specific flowchart of an implementation method of an intelligent charging energy routing system according to another embodiment of the present disclosure.

The implementation of objectives, functional features, and advantages of the present disclosure will be further described with reference to the accompanying drawings and the embodiments.

### DETAILED DESCRIPTION OF THE EMBODIMENTS

The technical solutions in the embodiments of the present disclosure are clearly and completely described below with reference to the accompanying drawings in the embodiments of the present disclosure. Apparently, the described embodiments are merely a part rather than all of the embodiments of the present disclosure. All other embodiments obtained by a person of ordinary skill in the art based on the embodiments of the present disclosure without creative efforts shall fall within the protection scope of the present disclosure.

An objective of the present disclosure is to provide an intelligent charging energy routing system and an implementation method thereof, to resolve a prior-art defect that input powers of charging piles cannot be fully used, which causes idleness and a waste of many powers of power distribution.

To make objective, features, and advantages of the present disclosure more comprehensible, the following further describes the present disclosure in detail with reference to accompanying drawings and specific implementations.

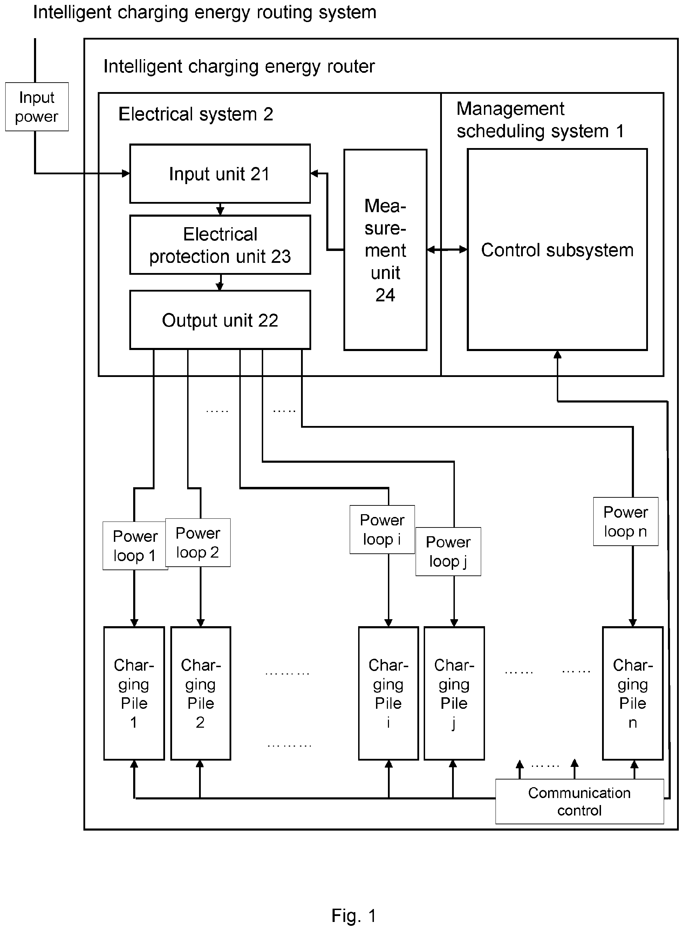

FIG. 1 is a schematic block diagram of an intelligent charging energy routing system according to the present disclosure. The intelligent charging energy routing system includes an intelligent charging energy router and charging piles. The intelligent charging energy router includes an electrical system 2 and a management scheduling system 1. An input end of the electrical system 2 is connected to a transformer, and an output end of the electrical system 2 is connected to the charging piles. A maximum output power limited by the intelligent charging energy routing system is less than a sum of rated powers of the charging piles. The management scheduling system 1 is used to deliver power control instructions to the charging piles, to control actual powers of the charging piles to be executed based on control powers and not exceed the maximum output power limited by the intelligent charging energy routing system, so that limited powers are properly scheduled among the connected charging piles, and safe operation of the intelligent charging energy router and an input power distribution system thereof is ensured.

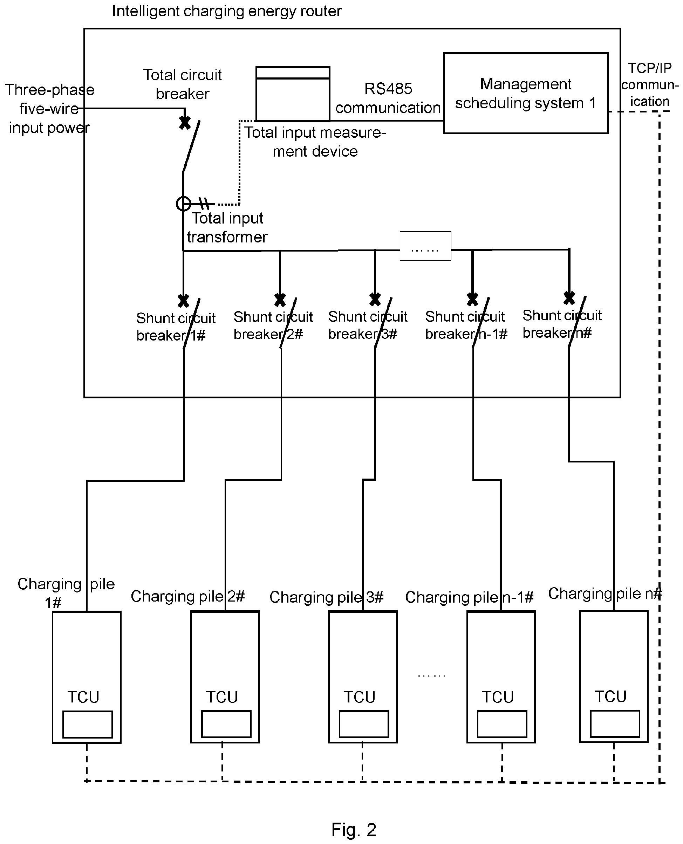

With reference to FIG. 1 and FIG. 2, in the present disclosure, the input end of the electrical system 2 may be connected to a transformer of a charging station, a power distribution cabinet, a power distribution network, or the like. The transformer is used as an example herein, and an actual case is not limited thereto.

The electrical system 2 is configured to output a power input by the intelligent charging energy router to the charging piles for use. The electrical system 2 includes an input unit 21 and an output unit 22 electrically connected in sequence. The maximum output power limited by the intelligent charging energy routing system is less than the sum of the rated powers of the charging piles. The output unit 22 is electrically connected to each charging pile. An input power of the electrical system 2 is a three-phase five-wire input power. It is set that a plurality of power loops such as a power loop 1, a power loop 2, a power loop i, a power loop j, ..., and a power loop n respectively form between a charging pile 1, a charging pile 2, a charging pile i, a charging pile j, ..., and a charging pile n and the output unit 22.

Further, when the sum of the rated powers of the connected charging piles output by the intelligent charging energy router in the present disclosure is greater than a maximum rated input power of the intelligent charging energy router, the intelligent charging energy router needs to use a safety device to prevent overcurrent, overvoltage, and overpower. Therefore, an electrical protection unit 23 is disposed to ensure circuit safety.

Therefore, the electrical system 2 in the present disclosure further includes the electrical protection unit 23. In an embodiment, the electrical protection unit 23 is disposed between the input unit 21 and the output unit 22. A maximum input power limited by the electrical protection unit 23 is less than a sum of maximum output powers output by the electrical protection unit 23 to all paths. The electrical protection unit 23 breaks a loop between the input unit 21 and the output unit 22 when a sum of actual output powers of the charging piles is greater than the maximum input power limited by the electrical protection unit 23. The maximum output power limited by the intelligent charging energy routing system is less than the maximum input power limited by the electrical protection unit 23.

In another embodiment, the electrical protection unit 23 may alternatively be disposed between the output unit 22 and the charging piles. The electrical protection unit 23 breaks a loop between the output unit 22 and the charging piles when a sum of actual output powers of the charging piles is greater than the maximum input power limited by the electrical protection unit 23. Alternatively, the electrical protection unit 23 is disposed before the input unit 21, that is, connected to an input end of the intelligent charging energy router. The electrical protection unit 23 breaks a loop between the electrical protection unit 23 and the input unit 21 when a sum of actual output powers of the charging piles is greater than the maximum input power limited by the electrical protection unit 23.

Specifically, one end of the input unit 21 is connected to a 3-phase 5-wire alternating current input cable or copper bar of the intelligent charging energy router, that is, connected to an output end of the transformer, and the other end is connected to the electrical protection unit 23. The input unit 21 may be connected to the copper bar or a terminal block or directly connected to a total input circuit breaker of the electrical protection unit 23.

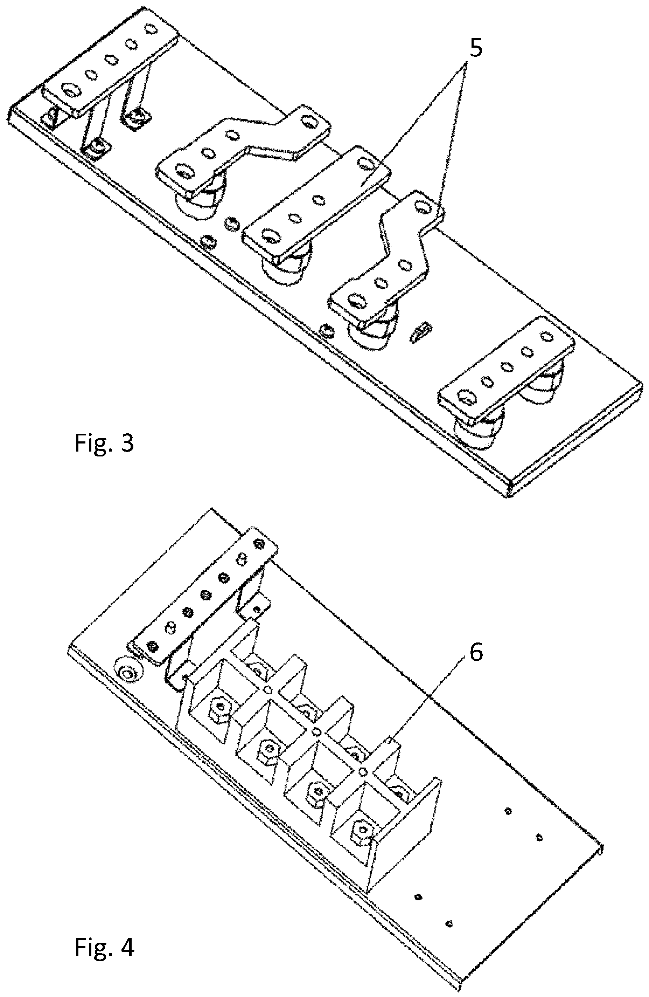

In an embodiment, with reference to FIG. 3, the input unit 21 in the electrical system 2 is connected by a copper bar 5, and the 3-phase 5-wire input cable or copper bar is directly connected to a wiring copper bar of the input unit 21. The other side of the copper bar 5 of the input unit 21 is connected to a cable or a copper bar of the electrical protection unit 23. More specifically, the copper bar of the input unit 21 on which a phase wire and a neutral wire are installed may be used. In this case, a device such as an insulator is used to isolate and install the copper bar on a metal bottom plate to maintain an electrical clearance and to meet a creepage distance requirement. If a grounding copper bar is used, the grounding copper bar may be directly installed on installation fittings of a metal bottom plate. A quantity of installation holes of the copper bar 5 of the input unit 21 is designed based on required connection holes, and the installation holes of the copper bar 5 may be increased to prepare for connection of another device that needs to take power or an input measurement point that needs to be increased. Connections to the transformer and the electrical protection unit 23 use studs of M6 and a higher specification to pass through the installation holes, and use bolts, nuts, flat washers and spring washers to fasten, to prevent loosening of the connections during transportation and in other cases. The copper bar 5 of the input unit 21 may be installed as a special-shaped copper bar that passes through an opening of the metal plate, and the phase line and the neutral line need to pass through the copper bar 5 simultaneously to prevent generation of eddy a current.

In another embodiment, with reference to FIG. 4, the input unit 21 in the electrical system 2 is connected by using a terminal block 6. The 3-phase 5-wire alternating current input cable is directly connected to the terminal block 6 and a grounding copper block. The other side of the terminal block 6 and the grounding copper bar is connected to a cable of the electrical protection unit 23. The phase line and the neutral line are connected to each other on the terminal block 6. To maintain an electrical clearance and meet a creepage distance requirement, the grounding copper bar is installed directly on installation fittings of a metal bottom plate.

With reference to FIG. 2, in another embodiment, the 3-phase 5-wire alternating current input cable of the intelligent charging energy router may be directly connected to the total input circuit breaker of the electrical protection unit 23 and the grounding copper bar. In this case, the total input circuit breaker of the electrical protection unit 23 usually uses a model of 3P+N, and the grounding copper bar is directly installed on the installation fittings of the metal bottom plate.

One end of the output unit 22 in the present disclosure is connected to the electrical protection unit 23, and the other end is connected to the alternating current output cable or copper bar of the intelligent charging energy router. The output unit 22 may also be connected to an output shunt circuit breaker of the electrical protection unit 23 by using a copper bar or a terminal bar or directly. A specific connection manner is the same as that of the input unit 21. Details are not described herein again.

In an implementation solution of the present disclosure, the maximum input power limited by the electrical protection unit 23 is less than the sum of the maximum output power output by the electrical protection unit 23 to all the paths. The maximum input power limited by the electrical protection unit 23 is selected based on the maximum rated input power of the intelligent charging energy router. That is, if a circuit breaker is selected as a protection element of the electrical protection unit 23, a specification and a model of an input protection circuit breaker is selected based on the maximum rated input power of the intelligent charging energy router. The maximum output power output by the electrical protection unit 23 to each path is selected based on a rated power of a connected charging pile. That is, if a circuit breaker is selected as the electrical protection unit 23, a specification and a model of an output protection circuit breaker are selected based on the rated power of the connected charging pile.

The electrical protection unit 23 breaks the loop between the input unit 21 and the output unit 22 when the sum of the actual output powers of the charging piles is greater than the maximum input power limited by the electrical protection unit 23. In this embodiment, the electrical protection unit 23 used is a circuit breaker having a thermal-magnetic trip. When a fault such as overcurrent, overvoltage, or overpower occurs, a tripping manner is used for circuit breaker protection. In another embodiment, the electrical protection unit 23 used is a fuse having an alternating current fuse. Protection is performed in a manner of alternating current fuse fusing.

Further, the electrical system 2 in the intelligent charging energy router in the present disclosure may further include a measurement unit 24. The measurement unit 24 is in communication connection to the management scheduling system 1, and is used by a control subsystem to perform power verification. The management scheduling system 1 sends the power control instructions to the charging piles based on a measured power of the input unit 21 and a calculation result of the maximum output power limited by the intelligent charging energy routing system. The measurement unit 24 is used to measure an actual output power of the intelligent charging energy router. When the power of the input unit 21 obtained by the measurement unit 24 exceeds the maximum output power limited by the intelligent charging energy routing system, the management scheduling system 1 in communication connection to the measurement unit 24 actively delivers the power control instructions to the charging piles. Content of the instruction includes power control or charging suspension. The connected charging pile executes the instruction of power control or charging suspension based on the delivered instruction of power control or charging suspension, to implement charging control and power control of the charging pile, to reduce an output power of the intelligent charging energy router to a safe output power.

The measurement unit 24 can measure a voltage and a current of alternating current input, and may communication with the management scheduling system 1 by using one or more of RS485 or other serial communication, wireless fidelity (WiFi), Bluetooth, Zigbee or other wireless communication modules, Ethernet ETH, a control area network (CAN), and the like. This is not specifically limited herein.

In an embodiment, the measurement unit 24 may be a three-phase four-wire alternating current meter having a communication function. Specifically, when a single-phase input current is less than 60A (including 60A), the three-phase four-wire alternating current meter is directly used to collect an input active and reactive voltage and current of each phase, and calculate a total active power, a total reactive power, and a total power. When a single-phase input current is higher than 60A, a transformer is used for current conversion, and a current of 5A is usually selected for secondary winding. In another embodiments, the measurement unit 24 may measure a voltage and a current by using others, for example, by using a programmable logic device measuring a voltage value through analog/digit (AD) and converting the voltage value into a power value.

The electrical system 2 implements electrical loop protection of the intelligent charging energy router, completes power input and output and electrical protection, and can increase a function of implementing power measurability by the measurement unit 24. The power loop is: directly connecting the 3-phase 5-wire alternating current input cable or copper bar of the intelligent charging energy router to the input unit 21, outputting power to the charging pile by using the output unit 22 through the electrical protection unit 23, and providing the optional measurement unit 24 to implement electrical protection of output of the charging pile and verifiability and measurability of the output power.

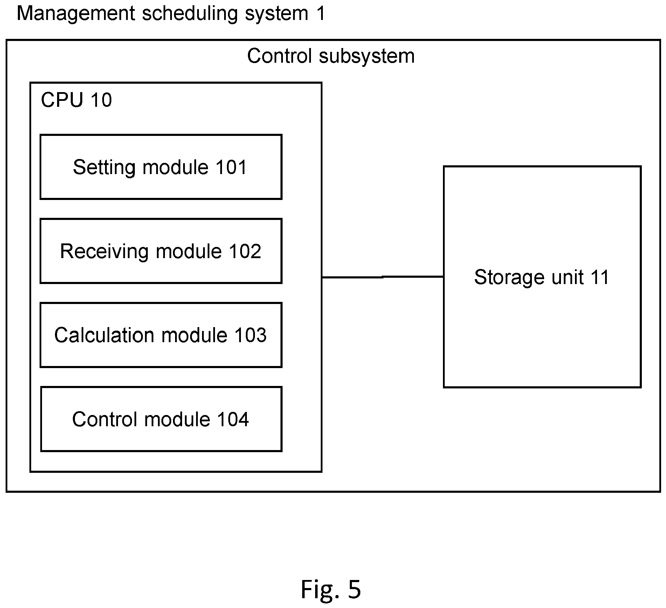

Further, with reference to FIG. 2 and FIG. 5, the management scheduling system 1 in the present disclosure includes a control subsystem in communication connection to each charging pile and a peripheral interface that supports communication. The management scheduling system 1 supports a wireless communication networking function and a local networking communication function. The control subsystem includes a central processing unit (CPU) 10 and a storage unit 11, the CPU 10 is configured to: set and read the stored maximum output power limited by the intelligent charging energy routing system, receive an actual power reported by the charging pile, calculate whether a sum of actual powers of the charging piles is greater than the read maximum output power limited by the intelligent charging energy routing system, calculate control powers of the connected charging piles in combination with required powers, and send power control instructions to the charging piles based on a calculation result, and the storage unit 11 is configured to store the maximum output power limited by the intelligent charging energy routing system and set by the CPU 10.

Furthermore, the CPU 10 includes a setting module 101, a receiving module 102, a calculation module 103, and a control module 104.

The setting module 101 is configured to set and read the stored maximum output power limited by the intelligent charging energy routing system, and the specified maximum output power limited by the intelligent charging energy routing system is stored in the storage unit 11.

The receiving module 102 is configured to receive messages reported by the charging piles, and information reported by the charging piles includes but is not limited to the actual powers and the required powers of the charging piles, and is used to receive data transmitted by the measurement unit 24.

The calculation module 103 is configured to: calculate the sum of the reported actual powers of the charging piles, compare the sum of the actual powers with the read maximum output power limited by the intelligent charging energy routing system, and calculate the control powers of the connected charging piles in combination with the required powers based on a comparison result.

The control module 104 is configured to deliver the control instructions to the charging piles based on the calculation result, to ensure that the actual powers of the charging piles are executed based on the control powers and do not exceed the specified maximum output power limited by the intelligent charging energy routing system.

There may be one or more control subsystems, and a plurality of control subsystems may be set to separately perform point-to-point separate communication with each connected charging pile.

The management scheduling system 1 completes data processing of the intelligent charging energy router, and performs message communication with the charging piles connected to the intelligent charging energy router, to configure and schedule power resources. The management scheduling system 1 communicates with the charging piles by using, but not limited to, one or more of Ethernet ETH, a control area network (CAN), an RS485 serial port, wireless fidelity (WiFi), Bluetooth, and a Zigbee wireless communication module.

In one of specific applications, the electrical system 2 is configured to output, for used by the charging piles, a three-phase five-wire input power input by the intelligent charging energy router. Transmission control units (TCU) of the charging pile are in communication connection to the management scheduling system 1 through a transmission control protocol/internet protocol (TCP/IP). The electrical system 2 includes a total circuit breaker, a total input transformer, and a shunt circuit breaker that are electrically connected in sequence. The shunt circuit breaker is electrically connected to each charging pile by using the power loop, to ensure that each power circuit is charged in a safe state, to protect a circuit. The measurement unit 24 is a total input measurement device, and is in communication connection to the management scheduling system 1 through an RS485 serial port.

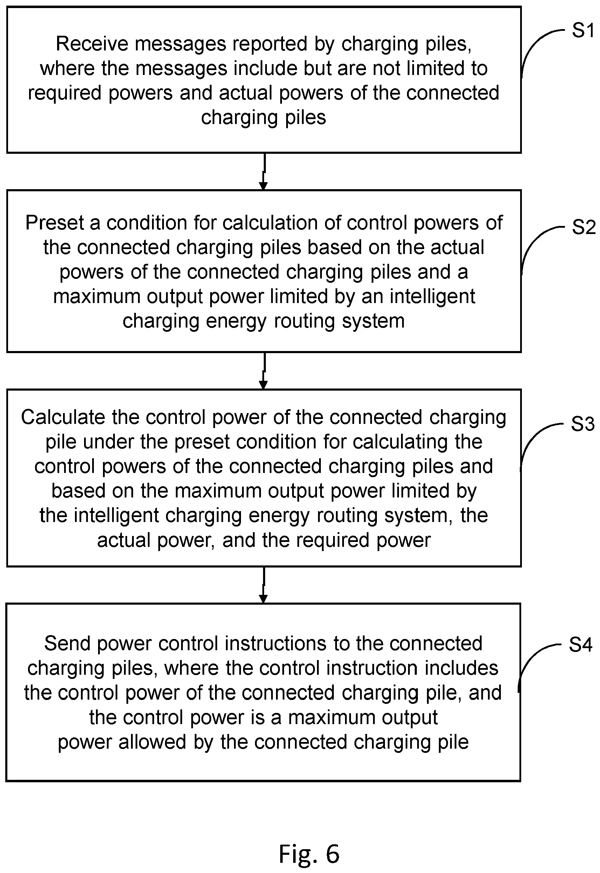

The present disclosure further provides an implementation method based on an intelligent charging energy routing system. FIG. 6 is a schematic flowchart of the implementation method of the intelligent charging energy routing system according to the present disclosure. The method applies the foregoing intelligent charging energy router. The method includes steps.

S1: Receive messages reported by the charging piles, where the messages include but are not limited to the required powers and the actual powers of the connected charging piles, and the messages further include charging time, charging statuses, and the like of the connected charging piles;

S2: Preset a condition for calculation of the control powers of the connected charging piles based on the actual powers of the connected charging piles and the maximum output power limited by the intelligent charging energy routing system.

S3: Calculate the control power of the connected charging pile under the preset condition for calculation of control powers of the connected charging piles and based on the maximum output power limited by the intelligent charging energy routing system, the actual power, and the required power.

S4: The intelligent charging energy router sends the power control instructions to the connected charging piles, where the control instruction includes the control power of the connected charging pile, and the control power is a maximum output power allowed by the connected charging pile.

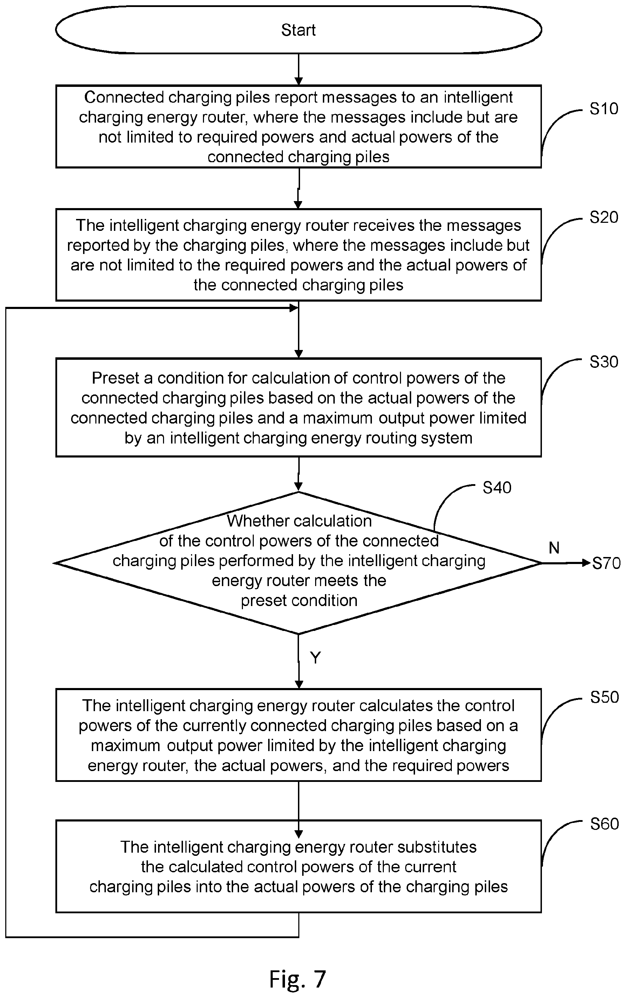

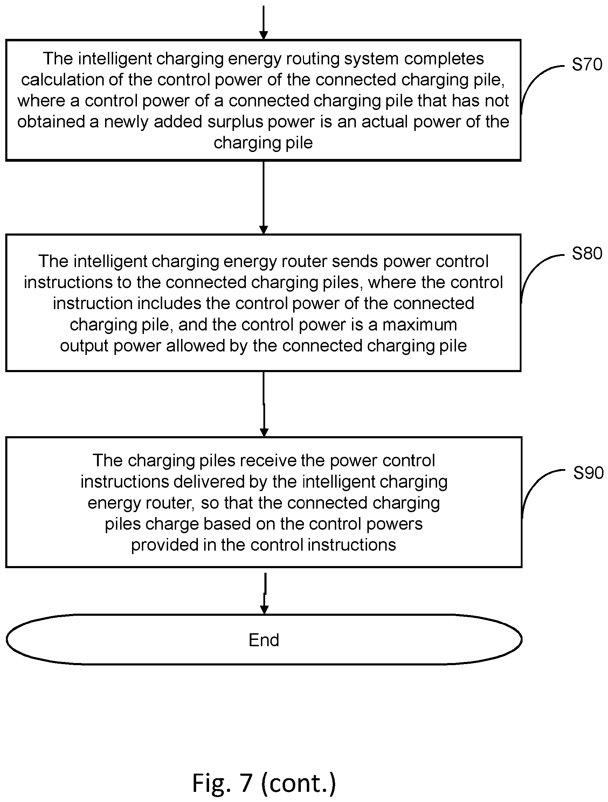

Specifically, referring to FIG. 7, procedures of the implementation method of the intelligent charging energy routing system include specific steps.

S10: The connected charging piles report the messages to the intelligent charging energy router, where the messages include but are not limited to the required powers and the actual powers of the connected charging piles.

S20: The intelligent charging energy router receives the messages reported by the charging piles, where the messages include but are not limited to the required powers and the actual powers of the connected charging piles.

S30: Preset the condition for calculation of the control powers of the connected charging piles based on the actual powers of the connected charging piles and the maximum output power limited by the intelligent charging energy routing system.

S40: Determine whether calculation of the control powers of the connected charging piles performed by the intelligent charging energy router meets the preset condition; and if calculation of the control powers of the connected charging piles meets the preset condition, proceed to S50 to calculate the control powers; otherwise, proceed to S70 to output the control powers of the connected charging pile.

S50: The intelligent charging energy router calculates the control powers of the currently connected charging piles based on a maximum output power limited by the intelligent charging energy router, the actual powers, and the required powers.

S60: The intelligent charging energy router substitutes the calculated control powers of the current charging piles into the actual powers of the charging piles. Proceed to S30 to re-proceed a procedure of calculating the control powers of the connected charging piles.

S70: The intelligent charging energy routing system completes calculation of the control power of the connected charging pile, where a control power of a connected charging pile that has not obtained a newly added surplus power is an actual power of the charging pile.

S80: The intelligent charging energy router sends the power control instructions to the connected charging piles, where the control instruction includes the control power of the connected charging pile, and the control power is a maximum output power allowed by the connected charging pile.

S90: The charging piles receive the power control instructions delivered by the intelligent charging energy router, so that the connected charging piles charge based on the control powers provided in the control instructions.

Presetting the condition in step S2 and step S30 is determining and comparing the sum of the actual powers of the charging piles with the maximum output power configured and limited by the intelligent charging energy routing system.

The control power of the connected charging pile is calculated based on the maximum output power limited by the intelligent charging energy routing system, the actual power, and the required power if the sum of the actual powers reported by the connected charging piles is greater than the maximum output power limited by the intelligent charging energy routing system, so that the sum of the actual powers of the charging piles does not exceed the maximum output power limited by the intelligent charging energy routing system when the control powers of the charging piles are calculated and output.

The control power of the connected charging pile is calculated based on the maximum output power limited by the intelligent charging energy routing system, the actual power, and the required power if there is a distributable surplus power between the sum of the actual powers reported by the connected charging piles and the maximum output power limited by the intelligent charging energy routing system, so that the distributable surplus power of the intelligent charging energy routing system is 0 or the calculated and output control power of the charging pile meets the required power.

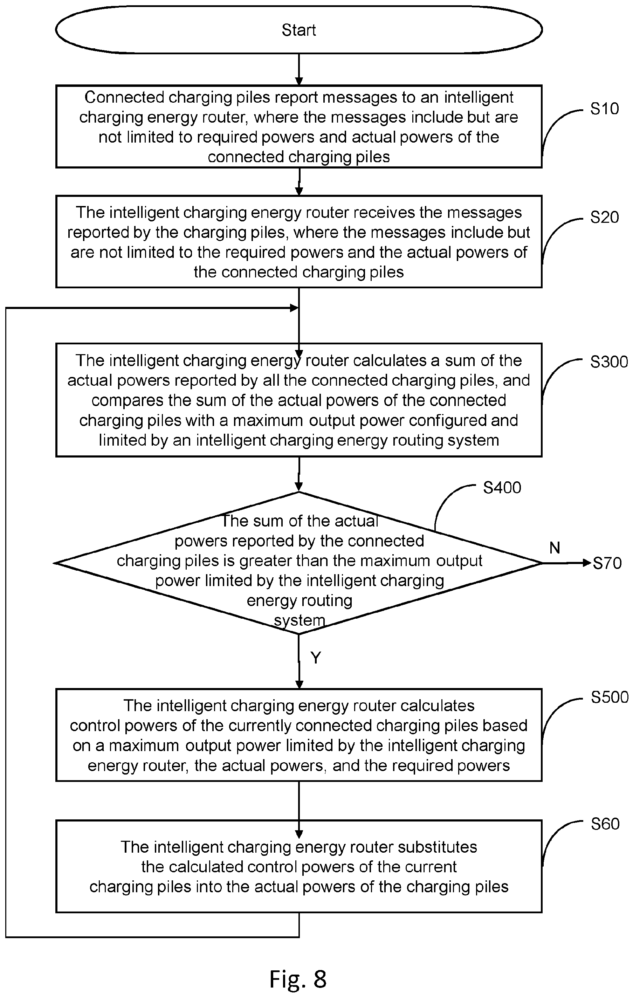

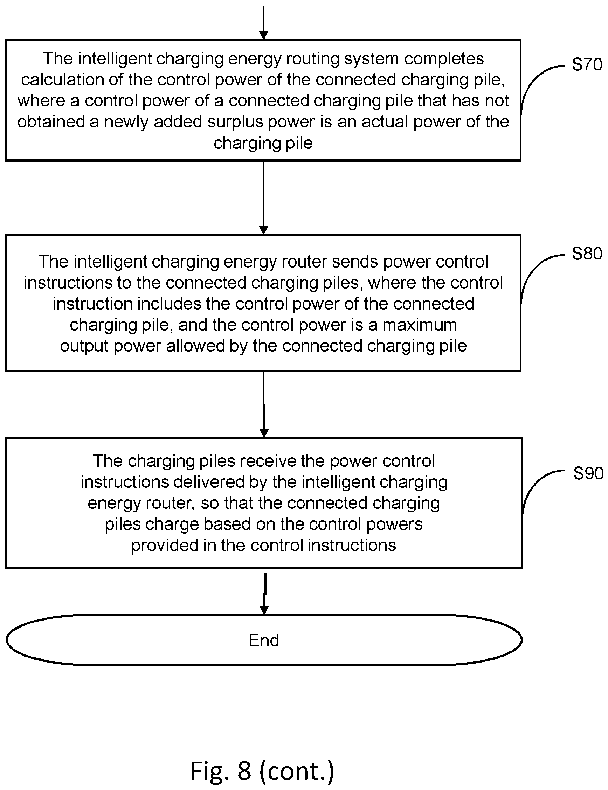

Specifically, with reference to FIG. 8, in an embodiment, presetting the condition is determining and comparing whether the sum of the actual powers of the charging piles is greater than the maximum output power configured and limited by the intelligent charging energy routing system, and the initial values of the control powers the connected charging piles are 0. In this case, specific procedures include steps.

S10: The connected charging piles report the messages to the intelligent charging energy router, where the messages include but are not limited to the required powers and the actual powers of the connected charging piles.

S20: The intelligent charging energy router receives the messages reported by the charging piles, where the messages include but are not limited to the required powers and the actual powers of the connected charging piles.

S300: The intelligent charging energy router calculates the sum of the actual powers reported by the connected charging piles, and compares the sum of the actual powers of the connected charging piles with the maximum output power configured and limited by the intelligent charging energy routing system.

S400: Determine and compare a precondition of the sum of the actual powers reported by the connected charging piles and the maximum output power limited by the intelligent charging energy routing system; if calculation of the control powers of the connected charging piles meets the preset condition, to be specific, the sum of the actual powers reported by the connected charging piles is greater than the maximum output power limited by the intelligent charging energy routing system, proceed to S500 to calculate the control powers; when the sum of the actual powers reported by the charging piles does not exceed the maximum output power limited by the intelligent charging energy routing system, it indicates that calculation of the control powers of the connected charging piles has been completed, and proceed to S70 to output the control powers of the connected charging piles.

S500: The intelligent charging energy router calculates the control powers of the currently connected charging piles based on the maximum output power limited by the intelligent charging energy router, the actual powers, and the required powers.

Specifically, the control powers of the connected charging piles may be calculated according to an algorithm, so that the control powers are less than the maximum output power limited by the intelligent charging energy routing system.

S60: The intelligent charging energy router substitutes the calculated control powers of the current charging piles into the actual powers of the charging piles. Proceed to S30 to re-proceed a procedure of calculating and determining the control powers of the connected charging piles.

S70: The intelligent charging energy routing system completes calculation of the control power of the connected charging pile, where the control power of the connected charging pile that has not obtained the newly added surplus power is the actual power of the charging pile.

S80: The intelligent charging energy router sends the power control instructions to the connected charging piles, where the control instruction includes the control power of the connected charging pile, and the control power is the maximum output power allowed by the connected charging pile.

S90: The charging piles receive the power control instructions delivered by the intelligent charging energy router, so that the connected charging piles charge based on the control powers provided in the control instructions.

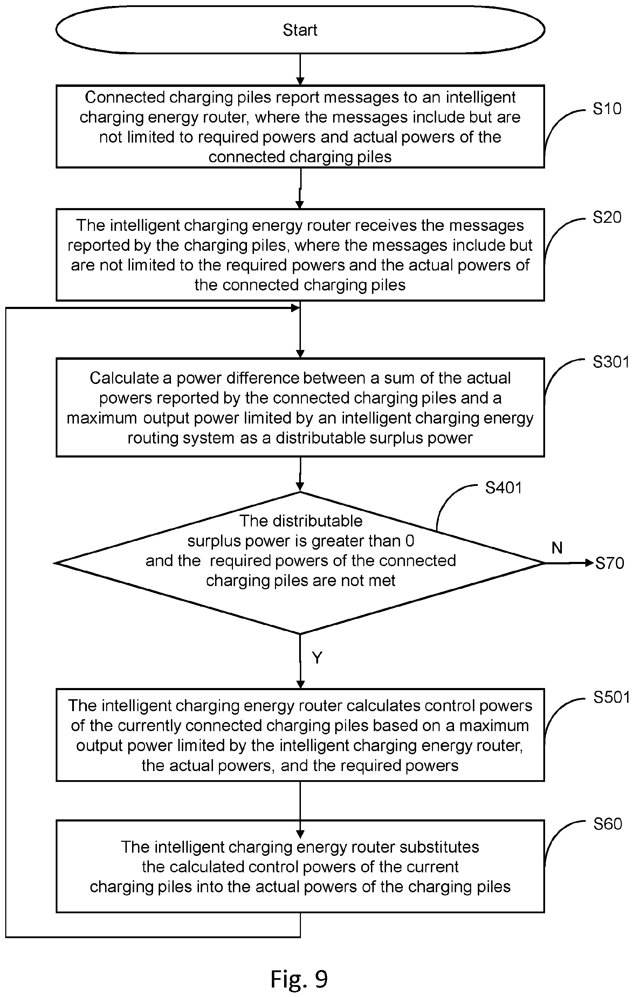

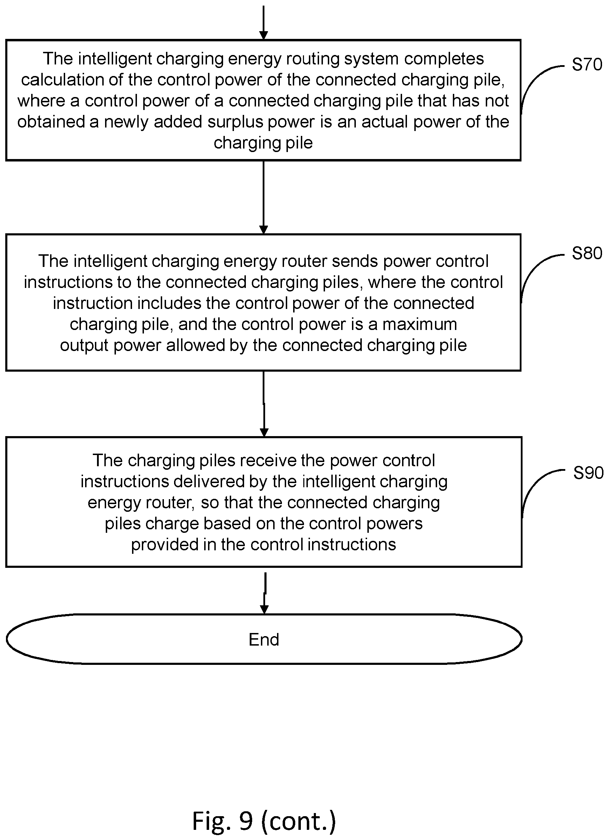

With reference to FIG. 9, in another embodiment, in an embodiment, presetting the condition is determining whether there is a distributable surplus power between the sum of the actual powers of the charging piles and the maximum output power configured and limited by the intelligent charging energy routing system. In this embodiment, specific steps and procedures of the implementation method of the intelligent charging energy routing system include the following steps.

S10: The connected charging piles report the messages to the intelligent charging energy router, where the messages include but are not limited to the required powers and the actual powers of the connected charging piles.

S20: The intelligent charging energy router receives the messages reported by the charging piles, where the messages include but are not limited to the required powers and the actual powers of the connected charging piles.

S301: Calculate a power difference between the sum of the actual powers reported by the connected charging piles and the maximum output power limited by the intelligent charging energy routing system as the distributable surplus power.

S401: Determine whether the distributable surplus power between the sum of the actual powers reported by the connected charging piles and the maximum output power limited by the intelligent charging energy routing system is greater than 0 and whether the required powers of the connected charging piles are not met; and if the distributable surplus power of the connected charging piles is greater than 0 and the required powers of the connected charging piles are not met, proceed to S500 to calculate the control powers; otherwise, it indicates that calculation of the powers of the connected charging piles has been completed, and proceed to S70 to output the control powers of the connected charging piles.

S501: The intelligent charging energy router calculates the control powers of the currently connected charging piles based on the maximum output power limited by the intelligent charging energy router, the actual powers, and the required powers.

Specifically, the control powers of the connected charging piles may be calculated according to an algorithm. The algorithm includes but is not limited to proportional even distribution or a first-come-first-served distribution algorithm. For example, the connected charging pile is processed in order of charging.

If the required powers of the connected charging piles are greater than the actual powers of the charging piles, the required powers of the charging piles are used as the control powers; and a difference between the required powers of the charging piles and the actual powers of the charging piles is subtracted from the surplus power.

S60: The intelligent charging energy router substitutes the calculated control powers of the current charging piles into the actual powers of the charging piles. Proceed to S30 to re-proceed a procedure of calculating the control powers of the connected charging piles.

S70: The intelligent charging energy routing system completes calculation of the control power of the connected charging pile, where in this embodiment, the control power of the connected charging pile that has not obtained the newly added surplus power is the actual power of the charging pile.

S80: The intelligent charging energy router sends the power control instructions to the connected charging piles, where the control instruction includes the control power of the connected charging pile, and the control power is the maximum output power allowed by the connected charging pile.

S90: The charging piles receive the power control instructions delivered by the intelligent charging energy router, so that the connected charging piles charge based on the control powers provided in the control instructions.

In this embodiment, it is determined whether there is the distributable surplus power between the sum of the actual powers reported by the connected charging piles and the maximum output power limited by the intelligent charging energy routing system. If yes, the distributable surplus power is distributed to the connected charging piles. The actual powers of the charging piles are increased without exceeding the maximum output power limited by the intelligent charging energy routing system, to improve charging efficiency and efficiently use an output power of the intelligent charging energy routing system.

In the present disclosure, the intelligent charging energy routing system implements that an input power of the intelligent charging energy router is less than the sum of the rated powers of all the connected charging piles, and the management scheduling system is used to deliver control power information to the charging piles, so that the limited powers are properly scheduled among the connected charging piles. In addition, the management scheduling system delivers the control instructions, the electrical protection unit is disposed in the electrical system, and the measurement unit in communication connection to the management scheduling system is additionally disposed, and triple protection of algorithm active protection, electrical protection, and measurement feedback protection is used to prevent the output power of the intelligent charging energy router from exceeding a maximum output power limited by the intelligent charging energy router, to ensure safe operation of the intelligent charging energy router and an input power distribution system thereof.

## Claims

1. An intelligent charging energy routing system, comprising an intelligent charging energy router and charging piles, wherein the intelligent charging energy router comprises an electrical system (2) and a management scheduling system (1), wherein the electrical system (2) is configured to output a power input by the intelligent charging energy router to the charging piles for use, and comprises an input unit (21) and an output unit (22) electrically connected in sequence, a maximum output power limited by the intelligent charging energy routing system is less than a sum of rated powers of the charging piles, the output unit (22) is electrically connected to each charging pile, the electrical system (2) further comprises an electrical protection unit (23), a maximum input power limited by the electrical protection unit (23) is less than a sum of maximum output powers output by the electrical protection unit (23) to all paths, and the maximum output power limited by the intelligent charging energy routing system is less than the maximum input power limited by the electrical protection unit (23);
the management scheduling system (1) comprises a control subsystem in communication connection to the charging piles, the control subsystem comprises a central processing unit (CPU) (10) and a storage unit (11), the CPU (10) is configured to: set and read the stored maximum output power limited by the intelligent charging energy routing system, receive an actual power and a required power that are reported by the charging pile, calculate whether a sum of actual powers of the charging piles is greater than the read maximum output power limited by the intelligent charging energy routing system, calculate control powers of the connected charging piles in combination with required powers, and send power control instructions to the charging piles based on a calculation result, and the storage unit (11) is configured to store the maximum output power limited by the intelligent charging energy routing system; and
the charging piles each are separately electrically connected to the output unit (22) and in communication connection to the control subsystem in the management scheduling system (1), are configured to upload the actual power and the required power to the management scheduling system (1), and to receive and execute the power control instruction delivered by management scheduling system (1),
wherein the electrical system (2) further comprises a measurement unit (24), the measurement unit (24) is configured to measure the power of the input unit, is in communication connection to the management scheduling system (1), and is used by the control subsystem to perform power verification, and the management scheduling system (1) is configured to send the power control instructions to the charging piles based on a calculation result between a measured power of the input unit (21) and the maximum output power limited by the intelligent charging energy routing system.

2. The intelligent charging energy routing system according to claim 1, wherein the electrical system (2) further comprises the electrical protection unit (23) disposed between the input unit (21) and the output unit (22), the maximum input power limited by the electrical protection unit (23) is less than the sum of the maximum output powers output by the electrical protection unit (23) to all the paths, and the electrical protection unit (23) is configured to break a loop between the input unit (21) and the output unit (22) when a sum of actual output powers of the charging piles is greater than the maximum input power limited by the electrical protection unit (23).

3. The intelligent charging energy routing system according to claim 1, wherein the electrical system (2) further comprises the electrical protection unit (23) disposed between the output unit (22) and the charging piles, the maximum input power limited by the electrical protection unit (23) is less than the sum of the maximum output powers output by the electrical protection unit (23) to all the paths, and the electrical protection unit (23) is configured to break a loop between the output unit (22) and the charging piles when a sum of actual output powers of the charging piles is greater than the maximum input power limited by the electrical protection unit (23).

4. The intelligent charging energy routing system according to claim 1, wherein the electrical system (2) further comprises the electrical protection unit (23) disposed before the input unit (21), the maximum input power limited by the electrical protection unit (23) is less than the sum of the maximum output powers output by the electrical protection unit (23) to all the paths, and the electrical protection unit (23) is configured to break a loop between the electrical protection unit (23) and the input unit (21) when a sum of actual output powers of the charging piles is greater than the maximum input power limited by the electrical protection unit (23).

5. The intelligent charging energy routing system according to claim 1, wherein the CPU (10) comprises a setting module (101), a receiving module (102), a calculation module (103), and a control module (104), wherein
the setting module (101) is configured to set and read the maximum output power limited by the intelligent charging energy routing system, and the specified maximum output power limited by the intelligent charging energy routing system is stored in the storage unit (11);
the receiving module (102) is configured to receive messages reported by the charging piles, and information reported by the charging piles comprises the actual powers and the required powers of the charging piles, and is used to receive data transmitted by the measurement unit (24);
the calculation module (103) is configured to: calculate the sum of the reported actual powers of the charging piles, compare the sum of the actual powers with the read maximum output power limited by the intelligent charging energy routing system, and calculate the control powers of the connected charging piles in combination with the required powers based on a comparison result; and
the control module (104) is configured to deliver the control instructions to the charging piles based on the calculation result, to ensure that the actual powers of the charging piles are executed based on the control powers and do not exceed the specified maximum output power limited by the intelligent charging energy routing system.

6. The intelligent charging energy routing system according to claim 1, wherein the electrical protection unit (23) is a thermal-magnetic trip circuit breaker.

7. The intelligent charging energy routing system according to claim 1, wherein the electrical protection unit (23) is a fuse having an alternating current fuse.

8. The intelligent charging energy routing system according to claim 1, wherein the measurement unit (24) is an alternating current meter having a communication function.

9. The intelligent charging energy routing system according to claim 1, wherein the measurement unit (24) is a programmable logic device, and the programmable logic device is configured to measure a voltage value through analog/digit (AD) and to convert the voltage value into a power value.

10. The intelligent charging energy routing system according to claim 1, wherein the measurement unit (24) is configured to communicate with the management scheduling system (1) by using an RS485 serial port, wireless fidelity (WiFi), Bluetooth, Zigbee, Ethernet ETH, or a control area network (CAN).

11. A control method of the intelligent charging energy routing system according to claim 1, comprising:
S1: receiving messages reported by the charging piles, wherein the messages comprise the required powers and the actual powers of the connected charging piles;
S2: presetting a condition for calculation of the control powers of the connected charging piles based on the actual powers of the connected charging piles and the maximum output power limited by the intelligent charging energy routing system; wherein the preset condition is determining and comparing the sum of the actual powers of the charging piles with the maximum output power configured and limited by the intelligent charging energy routing system;
S3: calculating the control power of the connected charging pile under the preset condition for calculation of the control powers of the connected charging piles and based on the maximum output power limited by the intelligent charging energy routing system, the actual power, and the required power; and
S4: sending the power control instructions to the connected charging piles, wherein the control instruction comprises the control power of the connected charging pile, and the control power is a maximum output power allowed by the connected charging pile.

12. The control method of the intelligent charging energy routing system according to claim 11, wherein
calculating the control power of the connected charging pile based on the maximum output power limited by the intelligent charging energy routing system, the actual power, and the required power if the sum of the actual powers reported by the connected charging piles is greater than the maximum output power limited by the intelligent charging energy routing system, so that the sum of the actual powers of the charging piles does not exceed the maximum output power limited by the intelligent charging energy routing system when the control powers of the charging piles are calculated and output; and
calculating the control power of the connected charging pile based on the maximum output power limited by the intelligent charging energy routing system, the actual power, and the required power if there is a distributable surplus power between the sum of the actual powers reported by the connected charging piles and the maximum output power limited by the intelligent charging energy routing system, so that the distributable surplus power of the intelligent charging energy routing system is 0 or the calculated and output control power of the charging pile meets the required power.

## Patentansprüche

1. Intelligentes Ladeenergie-Routingsystem, das einen intelligenten Ladeenergie-Router und Ladesäulen umfasst, wobei der intelligente Ladeenergie-Router ein elektrisches System (2) und ein Verwaltungsplanungssystem (1) umfasst, wobei
das elektrische System (2) dazu konfiguriert ist, eine durch den intelligenten Ladeenergie-Router eingegebene Leistung zur Verwendung an die Ladesäulen auszugeben, und eine Eingangseinheit (21) und eine Ausgangseinheit (22) umfasst, die in Reihe elektrisch angeschlossenen sind, wobei eine durch das intelligente Ladeenergie-Routingsystem begrenzte maximale Ausgangsleistung geringer ist als eine Summe von Nennleistungen der Ladesäulen, wobei die Ausgangseinheit (22) elektrisch mit jeder Ladesäule verbunden ist, das elektrische System (2) ferner eine elektrische Schutzeinheit (23) umfasst, eine durch die elektrische Schutzeinheit (23) begrenzte maximale Eingangsleistung geringer ist als eine Summe der maximalen Ausgangsleistungen, die durch die elektrische Schutzeinheit (23) an alle Pfade ausgegeben werden, und die durch das intelligente Ladeenergie-Routingsystem begrenzte maximale Ausgangsleistung geringer ist als die durch die elektrische Schutzeinheit (23) begrenzte maximale Eingangsleistung;
das Verwaltungsplanungssystem (1) ein Steuerungssubsystem in Kommunikationsverbindung mit den Ladesäulen umfasst, wobei das Steuerungssubsystem eine zentrale Verarbeitungseinheit (CPU) (10) und eine Speichereinheit (11) umfasst, wobei die CPU (10) zum Durchführen der folgenden Schritte konfiguriert ist: Einstellen und Auslesen der gespeicherten, durch das intelligente Ladeenergie-Routingsystem begrenzten maximalen Ausgangsleistung, Empfangen einer tatsächlichen Leistung und einer erforderlichen Leistung, die von der Ladesäule gemeldet werden, Berechnen, ob eine Summe der tatsächlichen Leistungen der Ladesäulen größer ist als die ausgelesene, durch das intelligente Ladeenergie-Routingsystem begrenzte maximale Ausgangsleistung, Berechnen von Steuerleistungen der angeschlossenen Ladesäulen in Kombination mit den erforderlichen Leistungen, und Senden von Leistungssteuerungsanweisungen an die Ladesäulen auf der Grundlage eines Berechnungsergebnisses, und die Speichereinheit (11) dazu konfiguriert ist, die durch das intelligente Ladeenergie-Routingsystem begrenzte maximale Ausgangsleistung zu speichern; und die Ladesäulen jeweils separat elektrisch mit der Ausgabeeinheit (22) verbunden sind und in Kommunikationsverbindung mit dem Steuerungssubsystem in dem Verwaltungsplanungssystem stehen und so konfiguriert sind, dass sie die tatsächliche Leistung und die erforderliche Leistung in das Verwaltungsplanungssystem hochladen und die vom Verwaltungsplanungssystem (1) bereitgestellte Leistungssteuerungsanweisung (1) empfangen und ausführen,
wobei das elektrische System (2) ferner eine Messeinheit (24) umfasst, wobei Messeinheit (24) so konfiguriert ist, dass sie die Leistung der Eingangseinheit misst, in Kommunikationsverbindung mit dem Verwaltungsplanungssystem steht und von dem Steuerungssubsystem verwendet wird, um eine Leistungsüberprüfung durchzuführen, und das Verwaltungsplanungssystem (1) so konfiguriert ist, dass es die Leistungssteuerungsanweisungen an die Ladesäulen auf der Grundlage eines Berechnungsergebnisses zwischen einer gemessenen Leistung der Eingangseinheit (21) und der durch das intelligente Ladeenergie-Routingsystem begrenzten maximalen Ausgangsleistung sendet.

2. Intelligentes Ladeenergie-Routingsystem nach Anspruch 1, wobei das elektrische System (2) ferner die elektrische Schutzeinheit (23) umfasst, die zwischen der Eingangseinheit (21) und der Ausgangseinheit (22) angeordnet ist, wobei die durch die elektrische Schutzeinheit (23) begrenzte maximale Eingangsleistung geringer ist als die Summe der durch die elektrische Schutzeinheit (23) an alle Pfade ausgegebenen maximalen Ausgangsleistungen, und wobei die elektrische Schutzeinheit (23) so konfiguriert ist, dass sie eine Schleife zwischen der Eingangseinheit (21) und der Ausgangseinheit (22) unterbricht, wenn eine Summe der tatsächlichen Ausgangsleistungen der Ladesäulen größer ist als die durch die elektrische Schutzeinheit (23) begrenzte maximale Eingangsleistung.

3. Intelligentes Ladeenergie-Routingsystem nach Anspruch 1, wobei das elektrische System (2) ferner die elektrische Schutzeinheit (23) umfasst, die zwischen der Ausgangseinheit (22) und den Ladesäulen angeordnet ist, wobei die durch die elektrische Schutzeinheit begrenzte maximale Eingangsleistung geringer ist als die Summe der durch die elektrische Schutzeinheit (23) an alle Pfade ausgegebenen maximalen Ausgangsleistungen, und wobei die elektrische Schutzeinheit (23) so konfiguriert ist, dass sie eine Schleife zwischen der Ausgangseinheit (22) und den Ladesäulen unterbricht, wenn eine Summe der tatsächlichen Ausgangsleistungen der Ladesäulen größer ist als die durch die elektrische Schutzeinheit (23) begrenzte maximale Eingangsleistung.

4. Intelligentes Ladeenergie-Routingsystem nach Anspruch 1, wobei das elektrische System (2) ferner die elektrische Schutzeinheit (23) umfasst, die vor der Eingangseinheit (21) angeordnet ist, wobei die durch die elektrische Schutzeinheit (23) begrenzte maximale Eingangsleistung geringer ist als die Summe der durch die elektrische Schutzeinheit (23) an alle Pfade ausgegebenen maximalen Ausgangsleistungen, und wobei die elektrische Schutzeinheit (23) so konfiguriert ist, dass sie eine Schleife zwischen der elektrischen Schutzeinheit (23) und der Eingangseinheit (21) unterbricht, wenn eine Summe der tatsächlichen Ausgangsleistungen der Ladesäulen größer ist als die durch die elektrische Schutzeinheit (23) begrenzte maximale Eingangsleistung (21).

5. Intelligentes Ladeenergie-Routingsystem nach Anspruch 1, wobei die CPU (10) ein Einstellmodul (101), ein Empfangsmodul (102), ein Berechnungsmodul (103) und ein Steuermodul (104) umfasst, wobei
das Einstellmodul (101) dazu konfiguriert ist, die durch das intelligente Ladeenergie-Routingsystem begrenzte maximale Ausgangsleistung einzustellen und auszulesen, und die eingestellte, durch das intelligente Ladeenergie-Routingsystem begrenzte maximale Ausgangsleistung in der Speichereinheit (11) gespeichert wird;
das Empfangsmodul (102) dazu konfiguriert ist, von den Ladesäulen gemeldete Nachrichten zu empfangen, wobei die von den Ladesäulen gemeldeten Informationen die tatsächlichen Leistungen und die erforderlichen Leistungen der Ladesäulen umfassen und dazu verwendet werden, von der Messeinheit (24) übertragene Daten zu empfangen;
das Berechnungsmodul (103) zum Durchführen der folgenden Schritte konfiguriert ist: Berechnen der Summe der gemeldeten tatsächlichen Leistungen der Ladesäulen, Vergleichen der Summe der tatsächlichen Leistungen mit der ausgelesenen, durch das intelligente Ladeenergie-Routingsystem begrenzten maximalen Ausgangsleistung, und Berechnen der Steuerleistungen der angeschlossenen Ladesäulen in Kombination mit den erforderlichen Leistungen auf der Grundlage eines Vergleichsergebnisses; und
das Steuermodul (104) dazu konfiguriert ist, die Steuerungsanweisung an die Ladesäulen auf der Grundlage des Berechnungsergebnisses bereitzustellen, um sicherzustellen, dass die tatsächlichen Leistungen der Ladesäulen basierend auf den Steuerleistungen ausgeführt werden und die vorgestellte, durch das intelligente Ladeenergie-Routingsystem begrenzte maximale Ausgangsleistung nicht überschreiten.

6. Intelligentes Ladeenergie-Routingsystem nach Anspruch 1, wobei es sich bei der elektrischen Schutzeinheit (23) um einen thermisch-magnetisch auslösenden Schutzschalter handelt.

7. Intelligentes Ladeenergie-Routingsystem nach Anspruch 1, wobei es sich bei der elektrischen Schutzeinheit (23) um eine Sicherung mit einer Wechselstrom-Sicherung handelt.

8. Intelligentes Ladeenergie-Routingsystem nach Anspruch 5, wobei es sich bei der Messeinheit (24) um einen Wechselstromzähler mit einer Kommunikationsfunktion handelt.

9. Intelligentes Ladeenergie-Routingsystem nach Anspruch 5, wobei es sich bei der Messeinheit 24) um eine programmierbare Logikvorrichtung handelt, wobei die programmierbare Logikvorrichtung so konfiguriert ist, dass sie einen Spannungswert über Analog/Digit (AD) misst und den Spannungswert in einen Leistungswert umwandelt.

10. Intelligentes Ladeenergie-Routingsystem nach Anspruch 5, wobei die Messeinheit (24) so konfiguriert ist, dass sie mit dem Verwaltungsplanungssystem unter Verwendung von seriellem RS485-Anschluss, Wireless Fidelity (WiFi), Bluetooth, Zigbee, Ethernet ETH oder Control Area Network (CAN) kommuniziert.

11. Steuerungsverfahren des intelligenten Ladeenergie-Routingsystems nach Anspruch 1, umfassend:
S1: Empfangen von Nachrichten, die von den Ladesäulen gemeldet werden, wobei die Nachrichten die erforderlichen Leistungen und die tatsächlichen Leistungen der angeschlossenen Ladesäulen umfassen;
S2: Voreinstellen einer Bedingung für die Berechnung der Steuerleistungen der angeschlossenen Ladesäulen auf der Grundlage der tatsächlichen Leistungen der angeschlossenen Ladesäulen und der durch das intelligente Ladeenergie-Routingsystem begrenzten maximalen Ausgangsleistung; wobei die voreingestellte Bedingung das Ermitteln und Vergleichen der Summe der tatsächlichen Leistungen der Ladesäulen mit der durch das intelligente Ladeenergie-Leitsystem konfigurierten und begrenzten maximalen Ausgangsleistung ist;
S3: Berechnen der Steuerleistung der angeschlossenen Ladesäule unter der voreingestellten Bedingung für die Berechnung der Steuerleistungen der angeschlossenen Ladesäulen und auf der Grundlage der durch das intelligente Ladeenergie-Routingsystem begrenzten maximalen Ausgangsleistung, der tatsächlichen Leistung und der erforderlichen Leistung; und
S4: Senden der Leistungssteuerungsanweisungen an die angeschlossenen Ladesäulen, wobei die Steuerungsanweisung die Steuerleistung der angeschlossenen Ladesäule umfasst und die Steuerleistung eine von der angeschlossenen Ladesäule zugelassene maximale Ausgangsleistung ist.

12. Steuerungsverfahren des intelligenten Ladeenergie-Routingsystems nach Anspruch 11, wobei
Berechnen der Steuerleistung der angeschlossenen Ladesäule auf der Grundlage der durch das intelligente Ladeenergie-Routingsystem begrenzten maximalen Ausgangsleistung, der tatsächlichen Leistung und der erforderlichen Leistung, wenn die Summe der von den angeschlossenen Ladesäulen gemeldeten tatsächlichen Leistungen größer ist als die durch das intelligente Ladeenergie-Routingsystem begrenzte maximale Ausgangsleistung, so daß die Summe der tatsächlichen Leistungen der Ladesäulen die durch das intelligente Ladeenergie-Routingsystem begrenzte maximale Ausgangsleistung nicht überschreitet, wenn die Steuerleistungen der Ladesäulen berechnet und ausgegeben werden; und
Berechnen der Steuerleistung der angeschlossenen Ladesäule auf der Grundlage der durch das intelligente Ladeenergie-Routingsystem begrenzten maximalen Ausgangsleistung, der tatsächlichen Leistung und der erforderlichen Leistung, wenn eine verteilbare Überschussleistung zwischen der Summe der von den angeschlossenen Ladesäulen gemeldeten tatsächlichen Leistungen und der durch das intelligente Ladeenergie-Routingsystem begrenzten maximalen Ausgangsleistung vorhanden ist, so dass die verteilbare Überschussleistung des intelligenten Ladeenergie-Routingsystems 0 ist oder die berechnete und ausgegebene Steuerleistung der Ladesäule die erforderliche Leistung erfüllt.

## Revendications

1. Système de routage d'énergie de recharge intelligente, comprenant un routeur d'énergie de recharge intelligente et des piles rechargeables, dans lequel le routeur d'énergie de recharge intelligente comprend un système électrique (2) et un système de planification de gestion (1), dans lequel le système électrique (2) est configuré pour produire une entrée de puissance par le routeur d'énergie de recharge intelligente vers les piles rechargeables à utiliser, et comprend une unité d'entrée (21) et une unité de sortie (22) connectées électriquement en séquence, une puissance de sortie maximale limitée par le système de routage d'énergie de recharge intelligente est inférieure à la somme des puissances nominales des piles rechargeables, l'unité de sortie (22) est connectée électriquement à chaque pile rechargeable, le système électrique comprend en outre une unité de protection électrique (23), une puissance d'entrée maximale limitée par l'unité de protection électrique (23) est inférieure à la somme des puissances de sortie maximales produites par l'unité de protection électrique (23) à tous les chemins, et la puissance de sortie maximale limitée par le système de routage d'énergie de recharge intelligente est inférieure à la puissance d'entrée maximale limitée par l'unité de protection électrique (23) ;
le système de planification de gestion (1) comprend un sous-système de commande en communication avec les piles rechargeables, le sous-système de commande comprend une unité centrale de traitement (CPU) (1) et une unité de stockage (11), la CPU (10) est configurée pour : définir et lire la puissance de sortie maximale stockée limitée par le système de routage d'énergie de recharge intelligente, recevoir une puissance actuelle et une puissance requise qui sont rapportées par la pile rechargeable, calculer si la somme des puissances actuelles des piles rechargeables est supérieure à la puissance de sortie maximale lue limitée par le système de routage d'énergie de recharge intelligente, calculer les puissances de commande des piles rechargeables connectées en combinaison avec les puissances requises, et envoyer des instructions de commande de la puissance aux piles rechargeables en fonction d'un résultat de calcul, et l'unité de stockage (11) est configurée pour stocker la puissance de sortie maximale limitée par le système de routage d'énergie de recharge intelligente ; et
chacune des piles rechargeables est connectée électriquement séparément à l'unité de sortie (22) et en connexion de communication avec le sous-système de commande du système de planification de gestion (1), est configurée pour télécharger la puissance actuelle et la puissance requise au système de planification de gestion (1), et recevoir et exécuter les instructions de commande de la puissance fournies par le système de planification de gestion (1), dans lequel le système électrique (2) comprend en outre une unité de mesure (24), l'unité de mesure (24) est configurée pour mesurer la puissance de l'unité d'entrée, est en connexion de communication avec le système de planification de gestion (1) et est utilisée par le sous-système de commande pour effectuer une vérification de puissance, et le système de planification de gestion (1) est configurée pour envoyer les instructions de commande de la puissance aux piles rechargeables en fonction d'un résultat de calcul entre une puissance mesurée de l'unité d'entrée (21) et la puissance de sortie maximale limitée par le système de routage d'énergie de recharge intelligente.

2. Système de routage d'énergie de recharge intelligente selon la revendication 1, dans lequel le système électrique (2) comprend en outre l'unité de protection électrique (23) disposée entre l'unité d'entrée (21) et l'unité de sortie (22), la puissance d'entrée maximale limitée par l'unité de protection électrique (23) est inférieure à la somme des puissances de sortie maximales produites par l'unité de protection électrique (23) à tous les chemins, et l'unité de protection électrique (23) est configurée pour rompre une boucle entre l'unité d'entrée (21) et l'unité de sortie (22) lorsque la somme des puissances de sortie actuelles des piles rechargeables est supérieure à la puissance d'entrée maximale limitée par l'unité de protection électrique (23).

3. Système de routage d'énergie de recharge intelligente selon la revendication 1, dans lequel le système électrique (2) comprend en outre l'unité de protection électrique (23) disposée entre l'unité de sortie (22) et les piles rechargeables, la puissance d'entrée maximale limitée par l'unité de protection électrique (23) est inférieure à la somme des puissances de sortie maximales produites par l'unité de protection électrique (23) à tous les chemins, et l'unité de protection électrique (23) est configurée pour rompre une boucle entre l'unité de sortie (22) et les piles rechargeables lorsque la somme des puissances de sortie actuelles des piles rechargeables est supérieure à la puissance d'entrée maximale limitée par l'unité de protection électrique (23).

4. Système de routage d'énergie de recharge intelligente selon la revendication 1, dans lequel le système électrique (2) comprend en outre l'unité de protection électrique (23) disposée en amont de l'unité d'entrée (21), la puissance d'entrée maximale limitée par l'unité de protection électrique (23) est inférieure à la somme des puissances de sortie maximales produites par l'unité de protection électrique (23) à tous les chemins, et l'unité de protection électrique (23) est configurée pour rompre une boucle entre l'unité de protection électrique (23) et l'unité d'entrée (21) lorsque la somme des puissances de sortie actuelles des piles rechargeables est supérieure à la puissance d'entrée maximale limitée par l'unité de protection électrique (23).

5. Système de routage d'énergie de recharge intelligente selon la revendication 1, dans lequel la CPU (10) comprend un module de définition (101), un module de réception (102), un module de calcul (103) et un module de commande (104), dans lequel,
le module de définition (101) est configuré pour définir et lire la puissance de sortie maximale limitée par le système de routage d'énergie de recharge intelligente, et la puissance de sortie maximale spécifiée limitée par le système de routage d'énergie de recharge intelligente est stockée dans l'unité de stockage (11) ;
le module de réception (102) est configuré pour recevoir des messages rapportés par les piles rechargeables, et des informations rapportées par les piles rechargeables comprennent les puissances actuelles et les puissances requises des piles rechargeables et sont utilisées pour recevoir des données transmises par l'unité de mesure (24);
le module de calcul (103) est configuré pour : calculer la somme des puissances actuelles rapportées des piles rechargeables, comparer la somme des puissances actuelles avec la puissance de sortie maximale lue limitée par le système de routage d'énergie de recharge intelligente, et calculer les puissances de commande des piles rechargeables connectées en combinaison avec les puissances requises en fonction d'un résultat de comparaison ; et
le module de commande (104) est configuré pour émettre les instructions de commande aux piles rechargeables en fonction du résultat du calcul, afin de s'assurer que les puissances actuelles des piles rechargeables sont exécutées en fonction des puissances de commande et ne dépassent pas la puissance de sortie maximale spécifiée limitée par le système de routage d'énergie de recharge intelligente.

6. Système de routage d'énergie de recharge intelligente selon la revendication 1, dans lequel l'unité de protection électrique (23) est un disjoncteur de déclenchement thermo-magnétique.

7. Système de routage d'énergie de recharge intelligente selon la revendication 1, dans lequel l'unité de protection électrique (23) est un fusible ayant un fusible à courant alternatif.

8. Système de routage d'énergie de recharge intelligente selon la revendication 1, dans lequel l'unité de mesure (24) est un compteur de courant alternatif ayant une fonction de communication.

9. Système de routage d'énergie de recharge intelligente selon la revendication 1, dans lequel l'unité de mesure (24) est un dispositif logique programmable, et le dispositif logique programmable mesure une valeur de tension de manière analogique/digital (AD) et convertit la valeur de tension en valeur de puissance.

10. Système de routage d'énergie de recharge intelligente selon la revendication 1, dans lequel l'unité de mesure (24) est configurée pour communiquer avec le système de planification de gestion (1) en utilisant un port série RS485, une fidélité sans fil (WiFi), Bluetooth, Zigbee, Ethernet ETH ou un réseau de zone de contrôle (CAN).

11. Procédé de commande du système de routage d'énergie de recharge intelligente selon la revendication 1, comprenant :
S1 : recevoir des messages rapportés par les piles rechargeables, dans lequel les messages comprennent les puissances requises et les puissances actuelles des piles rechargeables connectées ;
S2 : prédéfinir une condition de calcul des puissances de commande des piles rechargeables connectées en fonction des puissances actuelles des piles rechargeables connectées et de la puissance de sortie maximale limitée par le système de routage d'énergie de recharge intelligente ; dans lequel la condition prédéfinie consiste à déterminer et comparer la somme des puissances actuelles des piles rechargeables avec la puissance de sortie maximale configurée et limitée par le système de routage d'énergie de recharge intelligente ;
S3 : calculer la puissance de commande des piles rechargeables connectées dans la condition prédéfinie de calcul des puissances de commande des piles rechargeables connectées et en fonction de la puissance de sortie maximale limitée par le système de routage d'énergie de recharge intelligente, de la puissance actuelle et de la puissance requise ; et
S4 : envoyer les instructions de commande de la puissance aux piles rechargeables connectées, dans lequel l'instruction de commande comprend la puissance de commande de la pile rechargeable connectée, et la puissance de commande est une puissance de sortie maximale autorisée par la pile rechargeable connectée.

12. Procédé de commande du système de routage d'énergie de recharge intelligente selon la revendication 11, dans lequel,
calculer la puissance de commande de la pile rechargeable connectée en fonction de la puissance de sortie maximale limitée par le système de routage d'énergie de recharge intelligente, de la puissance actuelle et de la puissance requise si la somme des puissances actuelles rapportées par les piles rechargeables connectées est supérieure à la puissance de sortie maximale limitée par le système de routage d'énergie de recharge intelligente, de sorte que la somme des puissances actuelles des piles rechargeables ne dépasse pas la puissance de sortie maximale limitée par le système de routage d'énergie de recharge intelligente lorsque les puissances de commande des piles rechargeables sont calculées et produites ; et
calculer la puissance de commande de la pile rechargeable connectée en fonction de la puissance de sortie maximale limitée par le système de routage d'énergie de recharge intelligente, de la puissance actuelle et de la puissance requise s'il existe une puissance excessive distribuable entre la somme des puissances actuelles rapportées par les piles rechargeables connectées et la puissance de sortie maximale limitée par le système de routage d'énergie de recharge intelligente, de sorte que la puissance excessive distribuable du système de routage d'énergie de recharge intelligente soit de 0 ou que la puissance de commande calculée et de sortie de la pile rechargeable réponde à la puissance requise.
